# EUROPÄISCHE PATENTANMELDUNG

(11) **EP 1 394 755 A1**
(43) Veröffentlichungstag der Anmeldung: **03.03.2004**
(21) Anmeldenummer: 03016824.9
(22) Anmeldetag: 23.07.2003
(51) Int. Cl.: G08B 19/02, G01J 5/16, G01J 5/00, G01J 5/06

(54) **Strassenzustandssensor zur Detektierung der Fahrbahntemperatur**

(30) Priorität: 26.07.2002 DE 20211309 U
(71) Anmelder: Küpper-Weisser GmbH, 78199 Bräunlingen (DE)
(72) Erfinder: Isele, Rolf, 78234 Engen (DE)
(74) Vertreter: Klunker . Schmitt-Nilson . Hirsch

(57) **Zusammenfassung**

Ein Straßenzustandssensor zur Detektierung der Fahrbahntemperatur besitzt ein Thermopile (3) zur beabstandeten Messung der von einer Fahrbahndecke emittierten Wärmestrahlung und eine Temperaturregeleinrichtung (6-11) zur Regelung der Thermopile-Temperatur auf einen konstanten Wert, der vorzugsweise über der Umgebungstemperatur liegt. Dann genügt der Einsatz einfacher Heizelemente zur Regelung der Thermopile-Temperatur.

## Beschreibung

Die Erfindung betrifft einen Straßenzustandssensor zur Detektierung der Fahrbahntemperatur durch beabstandete Messung der von einer Fahrbahndecke emittierten Wärmestrahlung mittels eines Pyrometers.

Die Fahrbahntemperatur wird üblicherweise anhand der von der Fahrbahn emittierten Wärmestrahlung, das heißt Emissionsstrahlung im IR-Bereich, ermittelt. Zur Detektierung der IR-Strahlung mittels eines Pyrometers dient ein zur Fahrbahn beabstandetes und auf die Fahrbahn gerichtetes Meßelement, das in Fachkreisen auch als "Thermopile" bezeichnet wird. Wichtig ist die Messung der Fahrbahntemperatur für den Winterdienst, weil die Glättebildung, nicht nur von der Umgebungstemperatur sondern entscheidend auch von der möglicherweise davon abweichenden Fahrbahntemperatur abhängt.

Stationäre Systeme sind beispielsweise auf die auf einer Brücke befindliche Fahrbahn gerichtet, um entweder automatische Taumittelanlagen direkt zu steuern oder ein Signal an eine entfernte Zentrale zu senden, damit im Bedarfsfall Winterdienststreufahrzeuge eingesetzt werden können.

Thermopile-Sensoren werden aber auch unmittelbar in Winterdienstfahrzeugen eingesetzt, um die Fahrbahntemperatur zu ermitteln und in Abhängigkeit davon die auszubringende Streumittelmenge zu bestimmen. Problematisch dabei ist eine Messungenauigkeit insbesondere zu Beginn der Einsatzfahrten, wenn das Fahrzeug aus der Garage in die winterlich kalte Umgebung gelangt. Denn Thermopiles sind gegenüber Temperaturänderungen empfindlich. Man spricht in diesem Zusammenhang von einer Empfindlichkeit gegen thermischen Schock, der zur Folge hat, dass ein Thermopile eine falsche Temperatur anzeigt, solange es sich nicht an die Umgebungstemperatur angeglichen hat. Dies wiederum kann dazu führen, dass Streugut nicht oder nicht in ausreichender Menge gestreut wird. Der Grad der Temperaturfehlmessung hängt nicht nur von der tatsächlichen Temperaturdifferenz zwischen Thermopile und Umgebung ab, sondern auch von dem zeitlichen Verlauf der Temperaturänderungen.

Von der Firma HEITRONICS, Wiesbaden wird ein Pyrometer angeboten, das zusätzlich zur emittierten IR-Strahlung der Fahrbahndecke auch die emittierte IR-Strahlung des Pyrometergehäuses im Sichtbereich des Thermopile misst, um daraus die aktuelle Temperatur des Pyrometers zu bestimmen. Abhängig von der gemessenen Pyrometer-Temperatur wird die gemessene Fahrbahntemperatur korrigiert. Dadurch lassen sich Messfehler kompensieren, wenn die Pyrometer-Temperatur nicht konstant ist.

Derartige Pyrometer sind für mobile Einsatzzwecke an einem Winterdienststreufahrzeug eher ungeeignet. Sie werden bisher lediglich zu stationären Zwecken zum Beispiel an Brücken eingesetzt. Dies liegt wohl daran, dass diese Vorrichtungen technisch aufwendig und teuer sind, da sie einen im Thermopilegehäuse rotierenden Spiegel besitzen, über den die IR-Emissionsstrahlung intermittierend innerhalb und außerhalb des Gehäuses gemessen wird. Hinzu kommt, dass die Vorrichtung aufgrund der Spiegelanordnung und -lagerung verschleißanfällig und erschütterungsempfindlich ist, so dass sie für mobile Anwendungs-zwecke durch eine aufwendige Pufferaufhängung gegen Stöße geschützt werden müsste. Außerdem baut die Vorrichtung wegen des rotierenden Spiegels relativ groß, so dass ein zur Fahrbahn gerichtetes Spritzschutzrohr zum Schutz des Thermopiles vor Spritzwasser einen entsprechend großen Durchmesser und demzufolge relativ lang ausgebildet sein müsste. Insgesamt wird das Pyrometer dadurch sehr voluminös, was die Einbaumöglichkeiten am Fahrzeug einschränkt und seine Anbringung entsprechend aufwendig macht.

Aufgabe der vorliegenden Erfindung ist es daher, einen Straßenzustandssensor zur Detektierung der Fahrbahndecke für mobile Einsatzzwecke vorzuschlagen, der klein baut und eine zuverlässige Temperaturbestimmung der Fahrbahndecke ermöglicht.

Diese Aufgabe wird erfindungsgemäß durch einen Straßenzustandssensor gemäß Anspruch 1 gelöst. In davon abhängigen Ansprüchen sind vorteilhafte Weiterbildungen und Ausgestaltungen der Erfindung angegeben.

Dementsprechend ist vorgesehen, das Thermopile mittels einer Temperaturregeleinrichtung auf einem konstanten Temperaturwert zu halten. Dieser Wert sollte vorzugsweise in einem geeigneten Abstand über der Umgebungstemperatur liegen, die beim Einsatz von Streufahrzeugen üblicherweise unter 5°C liegt. Wenn der Temperatursollwert auf einen konstanten Wert zwischen 10°C und 50°C, vorzugsweise 20°C, eingestellt wird, genügt der Einsatz einfacher Heizelemente zur Regelung der Thermopiletemperatur.

Das Pyrometer arbeitet dann jederzeit in einem definierten, zeitlich konstanten Betriebszustand mit einer eindeutigen Kennlinie ohne verfälschenden Einfluß eines Thermoschocks.

Lediglich während der Aufwärmzeit sind Meßungenauigkeiten zu befürchten. Jedoch kann das Aufwärmen bereits zu einem Zeitpunkt stattfinden, noch bevor das Winterdienstfahrzeug die Garage zu Einsatzzwecken verlässt. Insbesondere ist es möglich, das Pyrometer über die gesamte Einsatzzeit auf Temperatur zu halten. Dies ist wegen der geringen Baugröße des erfindungsgemäßen Pyrometers, der Stärke der heutzutage üblichen Stromversorgungssysteme in Streufahrzeugen und insbesondere durch geeignete Wahl wärmeisolierender Materialien, aus denen die Pyrometerummantelung gefertigt ist, unproblematisch.

Um die Aufwärmzeit möglichst kurz zu halten, sind zwei unterschiedlich leistungsfähige Heizelemente für die Grob- und Feinregelung der Pyrometertemperatur vorgesehen. Mittels dem leistungsfähigeren Heizelement wird das Thermopile in kurzer Zeit in etwa auf die einzuregelnde Temperatur gebracht. Das weniger leistungsfähige Heizelement dient dann der Feineinstellung. Die Regelung übernimmt ein Microcontroller, der Information zur aktuellen Thermopiletemperatur von einem in unmittelbarer Nähe zum Thermopile angeordneten Temperatursensor erhält.

Die beiden Heizelemente sind vorzugsweise an einer Innenwandung des Pyrometergehäuses aus wärmeleitendem Material angeordnet, damit die Wärme der Heizelemente möglichst rasch über die Gehäusewandung zum Thermopile geleitet wird. Dies ist wesentlich für eine rasche Einregelung des Thermopile auf die gewünschte Solltemperatur. Besonders geeignet als Gehäusewandungsmaterial sind Materialien mit einem Wärmeleitkoeffizienten λ ≥ 100 W/mK, insbesondere also Aluminium und Kupfer, gegebenenfalls aber auch Messing.

Die Aufwärmzeit kann weiter gesenkt werden, wenn das Gehäuseinnere des Pyrometers mit einer wärmeleitfähigen Vergussmasse verfüllt ist. Dadurch wird nicht nur eine schnellere sondern auch eine gleichmäßigere Temperaturverteilung innerhalb des Pyrometers erreicht.

Gemäß einer weiter bevorzugten Ausführungsform der Erfindung kann vorgesehen werden, dass der die Thermopiletemperatur regelnde Microcontroller zusätzlich zur vom Pyrometer ermittelten Fahrbahntemperatur auch ein Ausgangssignal über die aktuelle Genauigkeit der Fahrbahntemperaturmessung erzeugt. Die Genauigkeit hängt ab von der Abwechslung der Ist-Temperatur von der Soll-Temperatur und von der zeitlichen Änderung der Thermopiletemperatur. Über eine externe Schnittstelle kann der aktuelle Genauigkeitszustand des Sensors beispielsweise dem Fahrzeugführer angezeigt werden. Je nachdem angezeigten Genauigkeitsgrad kann der Fahrzeugführer eine mehr oder minder große Korrekturmenge zu der auszutragenden Streumenge hinzugeben, oder eine solche Korrekturmenge kann unmittelbar in der automatischen Streumengenregeleinrichtung bestimmt und berücksichtigt werden. Für die kurze Zeit der Erwärmung des Sensors würden dann unter Umständen geringfügig von der optimalen Menge abweichende Streumengen ausgegeben. Dies wäre aber tolerierbar.

Vorzugsweise ist das Gehäuse des Pyrometers, in welchem das Thermopile mit den beiden Heizelementen und den weiteren elektronischen Bauelementen aufgenommen ist, kreisrund ausgebildet. Gegenüber rechteckigen Gehäusen bietet dies den Vorteil, dass der Thermopile in einfacher Weise in einem Spritzschutzrohr mit kleinem Durchmesser vor Gischt und Salzwasser geschützt werden kann. Aufgrund des kleinen Schutzrohrdurchmessers genügt ein vergleichsweise kurzes Rohr für diese Zwecke. Dadurch wird der Anbau des Pyrometers am Winterdienstfahrzeug erleichtert.

Die Verwendung eines kurzen Spritzschutzrohrs bietet auch den weiteren Vorteil, dass handelsübliche Pyrometer mit einem Sichtwinkel zwischen 5° und 30°, vorzugsweise etwa 7°, einsetzbar sind, ohne dass die Innenwandung des Spritzschutzrohrs vom Strahlungsempfangskegel des Thermopiles erfasst wird. Auf eine Linse zur Bündelung des Strahlengangs, wie es ansonsten erforderlich wäre, kann dann verzichtet werden.

Besteht dennoch die Gefahr, dass der Strahlungsempfangskegel des Thermopiles zumindest Teile der Spritzschutzrohrinnenwand erfasst, beispielsweise wegen eines schräg oder exzentrisch zur Schutzrohrachse ausgerichteten Thermopiles, sieht eine weiter bevorzugte Ausführungsform der Erfindung vor, das Spritzschutzrohr aus einem Material mit einem geringen Emissionsgrad, vorzugsweise mit einem Emissionsgrad ε < 0,1, insbesondere ε < 0,05 zu fertigen.

Dann ist es möglich, das Pyrometer im mit dem Spritzschutzrohr zusammengebauten Zustand zu kalibrieren, da etwaige vom Strahlungsempfangskegel des Thermopiles erfassten Schutzrohrinnenwandbereiche keinen oder jedenfalls einen vernachlässigbar kleinen Einfluss auf das Messergebnis haben und ein gegebenenfalls beschränkter Sichtbereich des Thermopiles durch die Kalibrierung kompensiert wird.

Ein noch kompakterer Aufbau des Pyrometers lässt sich erreichen, wenn das Sensorgehäuse über die Ebene, in der das Thermopile montiert ist, hinaus verlängert wird und dadurch ein im Sensorgehäuse integriertes Spritzrohr bildet. Der zusätzliche Aufwand eines separaten Spritzrohrs entfällt dann.

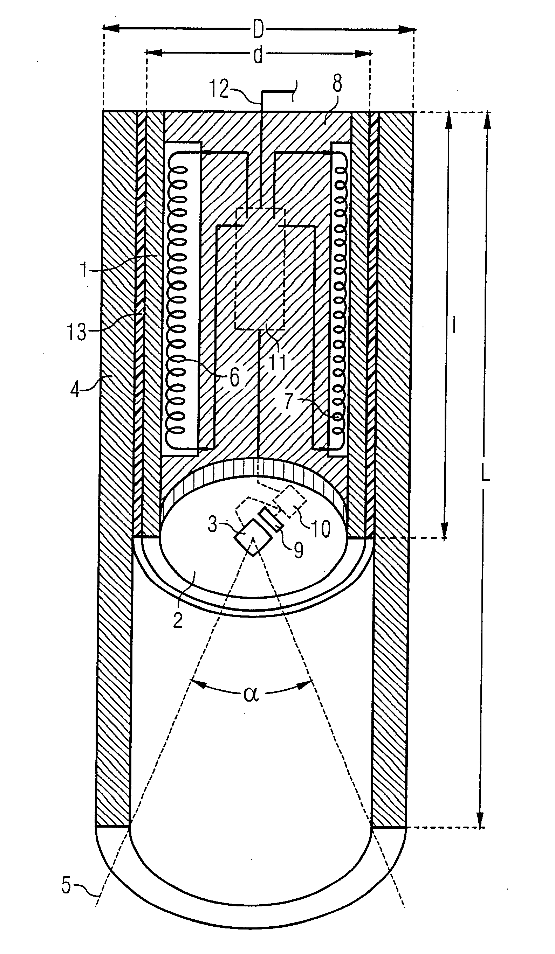

Nachfolgend wird die Erfindung anhand der einzigen Figur beispielhaft beschrieben. Die Figur zeigt ein erfindungsgemäßes Pyrometer im Querschnitt.

Das Pyrometer umfasst ein zylindrisches, an einem axialen Ende durch eine Vergussplatte 2 abgeschlossenes Gehäuse 1. In der Vergussplatte 2 ist ein Thermopile 3 vergossen. Das Gehäuse 1 sitzt in einem Spritzschutzrohr 4, dessen Länge so bemessen ist, dass es über das durch die Vergussplatte 2 verschlossene Ende des Gehäuses 1 gerade soweit hinausreicht, dass der Strahlungsempfangskegel 5 des Thermopiles 3 die Innenwandung des Spritzschutzrohrs 4 nicht erfasst. Das Spritzschutzrohr 4 ist in der Figur aus Gründen der besseren Darstellbarkeit wesentlich kürzer wiedergegeben, als es der Realität entsprechen würde. Wenn man als realistischen Sichtwinkel α des Strahlungsempfangskegels 5 einen Wert von α = 7° annimmt, als Außendurchmesser d des Gehäuses 1 das Maß d = 50 mm und als Länge 1 des Gehäuses 1 das Maß 1 = 130 mm, dann ergibt sich eine mögliche Gesamtlänge L von etwa 580 mm. Tatsächlich kann die Gesamtlänge L geringer gehalten werden.

Aufgrund von Fertigungsungenauigkeiten kann es vorkommen, dass das Thermopile 3 in der Vergussplatte 2 eine zur Rohrachse exzentrische oder geneigte Position einnimmt, so dass der Strahlungsempfangskegel 5 jedenfalls teilweise die Innenwandung des Spritzschutzrohrs 4 erfasst. Daher ist die Innenwandung des Spritzschutzrohrs 4, vorzugsweise das gesamte Spritzschutzrohr 4, aus einem Material mit einem möglichst gegen 0 gehenden Emissionsgrad ε gefertigt. Ein Emissionsgrad ε < 0,1, vorzugsweise ε < 0,05, kann durch geeignete Materialauswahl erzielt werden. Insbesondere durch eine polierte innere Oberfläche des Spritzschutzrohrs 4 kann der Emissionsgrad gesenkt werden. Aufgrund des niedrigen Emissionsgrads wirken sich die vom Strahlungsempfangskegel 5 erfassten Bereiche des Spritzschutzrohrs 4 nicht in nennenswerter Weise auf den vom Thermopile 3 ermittelten Messwert aus. Insbesondere lässt sich dadurch das Thermopile 3 in dem in der Figur dargestellten zusammengebauten Zustand des Straßenzustandssensors exakt kalibrieren.

Alternativ kann das Spritzschutzrohr 4 durch entsprechende Verlängerung des Gehäuses 1 in das Gehäuse 1 integriert sein. Dadurch reduziert sich wiederum der Spritzschutzrohrdurchmesser, welches demzufolge entsprechend kürzer ausgeführt werden kann.

An der Innenwandung des Gehäuses 1 sind Heizelemente 6, 7 montiert, beispielsweise geklebt. Als Heizelemente können handelsübliche Heizpatronen verwendet werden. Die beiden Heizelemente sind unterschiedlich leistungsfähig. Das leistungsfähigere Heizelement 6 mit einer Leistung von z. B. 60 Watt dient der Temperaturgrobeinstellung, um das Thermopile 3 möglichst rasch etwa auf die gewünschte Solltemperatur von etwa 20°C zu erwärmen. Das weniger leistungsfähigere Heizelement 7 mit einer Leistung von z. B. 10 Watt dient dann zur Feinjustierung der Thermopiletemperatur. Es können auch weitere Heizelemente vorgesehen werden, die vorzugsweise gleichmäßig über den Umfang der Innenwandung des Gehäuses 1 verteilt sind.

Um die von den Heizelementen 6 und 7 erzeugte Wärme möglichst rasch zum Thermopile 3 zu leiten, besteht das Gehäuse 1 aus einem Material mit hoher Wärmeleitfähigkeit und einem Wärmeleitkoeffizienten λ ≥ 100 W/mK. Besonders geeignet ist zu diesem Zweck Aluminium oder Kupfer, gegebenenfalls aber auch Messing. Selbstverständlich sollte auch die Vergussplatte 2 aus einem wärmeleitfähigen Material bestehen. Nach außen ist das Gehäuse 1 durch eine wärmeisolierende Ummantelung 13 vor Wärmeverlusten geschützt.

Zusätzlich ist das Innere des Gehäuses 1 mit einer wärmeleitfähigen Vergussmasse 8 verfüllt. Dadurch wird die von den Heizelementen 6, 7 erzeugte Wärme über den Gehäuseinnenraum auf die Rückseite der Vergussplatte 2 geleitet. Die Wärmeübertragung über die wärmeleitfähige Vergussmasse 8 ist wesentlich effektiver im Vergleich zu einem nur mit Luft gefüllten Gehäuseinnenraum. Als wärmeleitende Vergussmasse 8 wird eine Vergussmasse gewählt, die jedenfalls nicht vollständig aushärtet, damit die weiteren, nachfolgend noch beschriebenen Bauelemente im Gehäuseinnenraum keinen Schaden nehmen.

Zur Messung der aktuellen Temperatur des Thermopiles 3 ist ein Temperatursensor 9 in unmittelbarer Nähe zum Thermopile 3 vorgesehen. Der Temperatursensor 9 kann in der Vergussplatte 2 zusammen mit dem Thermopile 3 so vergossen werden, dass er an das Thermopile 3 unmittelbar angrenzt. Er kann aber auch auf der Rückseite des Thermopile 3 unmittelbar aufliegen. Insbesondere kann der Temperatursensor 9 am Thermopile 3 befestigt, beispielsweise mittels einem wärmeleitenden Kleber aufgeklebt sein, und gemeinsam mit diesem in der Vergussplatte vergossen werden.

Der Temperatursensor 9 und das Thermopile 3 sind über eine Steckverbindung 10, welche auf der Rückseite der Vergussplatte 2 montiert ist, elektrisch mit einer Platine 11 verbunden. Die für die Temperaturregeleinrichtung notwendigen elektronischen Bauteile wie Netzteil, Microcontroller und Steuersignalausgangsleitungen befinden sich auf der Platine 11. Der Microcontroller erhält von dem Temperatursensor 9 einen den Temperatur-Istwert des Thermopiles 3 repräsentierenden Messwert, vergleicht diesen mit einem vorgegebenen Temperatur-Sollwert und steuert die Heizelemente 6 und 7 in geeigneter Weise, bis der Temperatur-Istwert dem Temperatur-Sollwert entspricht.

Das Pyrometer stellt über die Steuersignalausgangsleitungen 12 Daten und/oder Signale zur Verfügung, welche für eine andere Regeleinrichtung die Grundlage dafür bilden, die vom Winterdienstfahrzeug auszutragende Streumenge zu bestimmen. Zusätzlich zu der mittels des Thermopiles 3 bestimmten Fahrbahntemperatur werden Daten und/oder Signale zur Verfügung gestellt, die Auskunft geben über den Genauigkeitsgrad der Temperaturmessung des Thermopiles. Aufgrund dieser zusätzlichen Information kann in der Streumengen-Regeleinrichtung z. B. ein Streumengenzuschlag bestimmt werden.

Vorzugsweise werden die Zusatzinformation über den Genauigkeitsgrad der Thermopiletemperatur und die gemessene Fahrbahntemperatur als digitale Information unmittelbar z. B. über das CAN-Bussystem oder über serielle Datenschnittstellen in die Steuerung des Winterdienstgeräts und damit in den Streumengenregelkreis eingespeist. Alternativ können diese Informationen auch als analoge Signale über zwei Stromschnittstellen mit einem Stromausgang von beispielsweise 4 bis 20 mA oder Spannungsschnittstellen von z. B. 0-10 V zur Verfügung gestellt werden. Solche analogen Schnittstellen lassen sich jedoch durch die digitale Dateneinspeisung einsparen.

Der zuvor beschriebene Straßenzustandssensor zur Detektierung der Fahrbahntemperatur besitzt eine vergleichsweise kleine Baugröße. Der Durchmesser d des das Thermopile 3 aufnehmenden Gehäuses 1 beträgt beispielsweise nur 50 mm. Dadurch kann das die Gesamtabmessung des Straßenzustandssensors maßgeblich mitbestimmende Spritzschutzrohr 4 entsprechend klein gehalten werden und besitzt einen Außendurchmesser D von beispielsweise 60 mm und eine Gesamtlänge L von beispielsweise L = 450 mm. Die Herstellungskosten für den Straßenzustandssensor sind im Vergleich zu herkömmlichen Lösungen äußerst gering.

### Bezugszeichenliste

- 1: Gehäuse
- 2: Vergussplatte
- 3: Thermopile
- 4: Spritzschutzrohr
- 5: Strahlungskegel
- 6: Heizelement (60 W)
- 7: Heizelement (10 W)
- 8: Vergussmasse
- 9: Temperatursensor
- 10: Steckverbindung
- 11: Platine
- 12: Steuersignalausgangsleitungen
- 13: isolierende Ummantelung
- α: Sichtwinkel

## Patentansprüche

1. Straßenzustandssensor zur Detektierung der Fahrbahntemperatur, umfassend ein Thermopile (3) zur beabstandeten Messung der von einer Fahrbahndecke emittierten Wärmestrahlung und eine Temperaturregeleinrichtung (6-11) zur Regelung der Thermopiletemperatur auf einen konstanten Wert.

2. Straßenzustandssensor nach Anspruch 1, wobei die Temperaturregeleinrichtung einen Temperatursensor (9) in unmittelbarer Nähe zum Thermopile (3) besitzt.

3. Straßenzustandssensor nach Anspruch 1 oder 2, wobei der konstante Wert auf einen Wert zwischen 10°C und 50°C eingestellt oder einstellbar ist.

4. Straßenzustandssensor nach Anspruch 3, wobei der konstante Wert auf 20°C eingestellt oder einstellbar ist.

5. Straßenzustandssensor nach einem der Ansprüche 1 bis 4, umfassend mindestens zwei unterschiedlich leistungsfähige Heizelemente (6, 7) für die Grob- und Feinregelung der Thermopiletemperatur.

6. Straßenzustandssensor nach Anspruch 5, wobei die beiden Heizelemente (6, 7) an einer Innenwandung eines das Thermopile (3) aufnehmenden Gehäuses (1) angeordnet sind.

7. Straßenzustandssensor nach Anspruch 6, wobei das Gehäuse aus einem Material mit einem Wärmeleitkoeffizient λ ≥ 100 W/mK besteht.

8. Straßenzustandssensor nach Anspruch 7, wobei das Gehäuse (1) aus Aluminium besteht.

9. Straßenzustandssensor nach einem der Ansprüche 5 bis 8, wobei das Gehäuse (1) mit Vergussmasse (8) verfüllt ist.

10. Straßenzustandssensor nach einem der Ansprüche 6 bis 9, wobei das Gehäuse (1) einen kreisrunden Querschnitt besitzt.

11. Straßenzustandssensor nach einem der Ansprüche 1 bis 10, umfassend ein Spritzschutzrohr (4), durch welches hindurch das Thermopile (3) die Wärmestrahlung misst.

12. Straßenzustandssensor nach Anspruch 11, wobei das Spritzschutzrohr (4) integraler Bestandteil eines das Thermopile (3) aufnehmenden Gehäuses (1) ist, welches zu diesem Zweck entsprechend verlängert ist.

13. Straßenzustandssensor nach Anspruch 11 oder 12, wobei zumindest die Innenwandung des Spritzschutzrohrs (4) aus einem Material mit geringem Emissionsgrad ε < 0,1, insbesondere ε < 0,05 besteht.

14. Straßenzustandssensor nach einem der Ansprüche 1 bis 13, wobei das Pyrometer (3) einen Sichtwinkel α zwischen 5° und 30°, vorzugsweise etwa 7°, besitzt.

15. Straßenzustandssensor nach einem der Ansprüche 1 bis 14, wobei die Temperaturregeleinrichtung einen Microcontroller zur Ermittlung des Genauigkeitsgrads der Temperaturmessung des Thermopiles sowie eine externe Schnittstelle (12) zum Zurverfügungstellen des ermittelten Genauigkeitsgrads an ein externes Gerät umfasst.
